# EUROPEAN PATENT APPLICATION

(11) **EP 2 869 112 A1**
(43) Date of publication of application: **06.05.2015**
(21) Application number: 14180861.8
(22) Date of filing: 13.08.2014
(51) Int. Cl.: G02B 27/00

(54) **Projection screen for projecting an image and method for adapting a projections screen**

(30) Priority: 30.10.2013 DE 102013222036
(71) Applicant: Johnson Controls GmbH, 51399 Burscheid (DE)
(72) Inventor: Cittatini, Ruddy, 50823 Köln (DE); Suess, Manfred, 75196 Remchingen (DE); Lichtenberg, Sören, 76227 Karlsruhe (DE); Borschberg, Frank, 50674 Köln (DE); Chauveau, Benoit, 95540 Méry Sur Oise (FR)
(74) Representative: Loock, Jan Pieter

(57) **Abstract**

A projection screen (11-13) for displaying an image emitted by a projection device (2), wherein the projection screen (11-13) is arranged between the projection device (2) and a potential viewer (10) of the screen, wherein the projection screen comprises a first plate (11), a second plate (12) and a diffusor (13), wherein the first plate (11) and the second plate (12) are at least partially transparent and the diffusor (13) is arranged between the first plate (11) and the second plate (12), wherein the second plate (12) is thicker than the first plate (11).

## Description

### Background

The invention relates to a projection screen that is provided for projecting an image emitted by a projection device.

The requirements related to projection screens, in particular with respect to their stress resistance, have been increased in the recent past. In particular, it is expected nowadays from projection screens that they are not only thin but also such though that the projection screen can be used as a touchscreen. Simultaneously the image quality should not suffer, when the projection screen is adapted to the mentioned requirements. Furthermore it is intended to limit the cost in order to install it extensively. In particular, it is provided to install the projection screens inside an interior space of a vehicle. For such projection screens additional requirements has to be considered. For example the projection screen integrated inside a vehicle has to manage permanently changing light conditions such that the quality of the projected image is not reduced.

### Summary

It is an object of the present invention to provide a projection screen being both flat and usable as a touchscreen. Furthermore the projection screen should work properly, even if the projection screen is used in an environment with permanently changing light conditions.

The object of the present invention is solved by a projection screen for displaying an image emitted by a projection device, wherein the projection screen is arranged between the projection device and a potential viewer of the screen, wherein the projection screen comprises a first plate; a second plate and a diffusor, wherein the first plate and the second plate are at least partially transparent and the diffusor is arranged between the first plate and the second plate.

Compared to the state of the art the quality of a projected image on the projection screen that comprises the first plate, the second plate and the diffusor is improved, in particular compared to those having only one transparent plate. The quality of the projected screen is thereby defined by measurable quantities such as contrast or reflectivity. In particular, the projected image is improved with respect to an image sharpness and a sparkle effect. Furthermore it is provided that the projection device comprises a RGB-module or optical elements that improve the quality of the image being emitted from the projection device or that support arranging the screen as near as possible to the projection device. Preferably the projection screen has a main plane, wherein the first plate, the second plate and the diffusor substantially extend along the main plane. It is thinkable that the projection screen is orientable such that the main plane of the projection screen substantially extends in a direction being perpendicular to an imaginary line that connects the potential viewer with the projection device. Furthermore it is provided that the first plate, the second plate and the diffusor are arranged directly, in particular gaplessly, next to each other. Thereby it is thinkable that the first plate, the second plate and the diffusor extends uniformly along the main plane, in particular in a direction parallel to the main plane. In particular, it is thinkable that the first plate has an incident surface, wherein light form the projection device enters the projection screen through the incident surface, wherein the incident surface is plane or flat. Moreover the second plane has an exit surface, wherein the light from the projection screen exits the projection screen through the exit surface, wherein the exit surface is plane or flat. Furthermore it is also thinkable that the diffusor is free of absorbing elements.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

In another embodiment it is provided that the projection screen has a main plane, wherein the first plate faces the projection device and the second plate faces the potential viewer of the projection screen, wherein the second plate is thicker than the first plate along a direction being perpendicular to the main plane. In particular the thickness of the second plate is selected such that the projection screen is usable as a touchscreen. Consequently it is possible to modify on one hand the thickness of the second plate for realizing a projection screen being usable as a touchscreen and on the other hand the thickness of the first plate for optimization of the projected image. In particular, it is provided that the thickness of the second plate is independent of the thickness of the first plate. It is also thinkable that the thickness of the second plate is
-- greater than the double of the thickness of the first plate and
-- smaller than the triple of the thickness of the first plate. It is also thinkable that a ratio between the thickness of the second plate and the thickness of the first plate (thickness of the second plate/thickness of the first plate) is greater than 15, preferably greater than 20 and more preferably greater than 25.

In another embodiment of the present invention it is provided that the first plate and/or the second plate comprise a polycarbonate. Due to its comparatively high transparency it is excellent choice as a material for the first and second plate.

In another embodiment of the present invention it is provided that the diffuser comprises at least partially a semi-transparent material. The diffusor advantageously causes a uniform illumination of the projection screen

In another embodiment of the present invention it is provided that an image property - such as sharpness and/or sparkle effect- noticed by the potential viewer are adaptable by the thickness of the first plate. In particular it is provided that the thickness of the first plate is selected or chosen such that the projected image on the projection screen is as sharp as possible. Moreover it is possible to select the thickness of the first plate such that a sparkling effect of the projection screen is reduced or even vanishes.

In another embodiment of the present invention it is provided that the projection screen is at least partially a touchscreen.

In another embodiment of the present invention the projection screen is integrable in a vehicle, preferably inside am interior space of the vehicle. Preferably the projection screen is integrated in a headrest of a vehicle seat of the vehicle. It is also thinkable that the projection screen is connected, in particular pivoted, directly or indirectly to a chassis of the vehicle. Furthermore it is provided that the projection screen is integrated in a dashboard of the vehicle and by using a touchscreen functionality of the projection screen it is possible to determinate a setting related to the vehicle, such as a temperature for the interior space, a setting for the vehicle seat, a radio channel or the like.

Another aspect of the present invention is a projection unit, wherein the projection unit comprises a projection device and a projection screen according to the present invention. Preferably the projection device and the projection screen are designed and are arranged save-spacing. Consequently the projection unit can be integrated extensively in plurality of fields of application, in particular inside a vehicle.

Another aspect of the present invention is a method for adapting a projection screen according to the present invention, wherein the thickness of the first plate is selected for adapting the image properties, in particular the projected image. Preferably the second plate is adapted such thick that the projection screen can be used as a touchscreen and the first plate adjusts the quality of the projected image.

In another embodiment of the present invention it is provided that the thickness of the first plate is adapted to an environment of a field of application. Consequently the projection screen can be individually adapted to the field of application in order to guaranty the requirements regarding the desired quality of the projected image.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings

### Brief description of the drawings

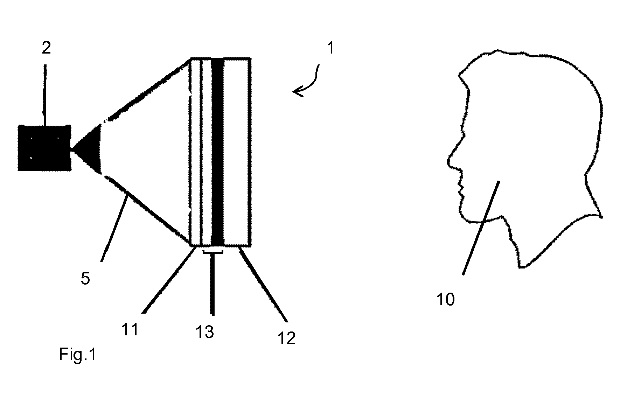

**Figure 1** shows a projection screen according to a first exemplary embodiment of the present invention.

### Detailed description

The present invention will be descripted with respect to particular embodiments and with the reference to certain drawings but the invention is not limited thereto but only by the claims. The drawings described are only schematic and are non-limiting. In the drawings, the size of some elements may be exaggerated and not drawn on scale for illustrative purposes.

Where an indefinite or definite article is used when referring to a singular noun, e. G. "a", "an", "the", this includes a plurals of the noun unless something else is specifically stated. Furthermore, the terms first, second, third and the like in the description and in the claims are used to distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

In **figure 1** a projection screen 1 according to a first exemplary embodiment of the present invention is illustrated. It is provided, that the projection screen 1 is arranged between a projection device 2 and a potential viewer 10. In particular, it is provided that the projection screen is arranged inside an interior space of a vehicle. For example the projection screen 1 mounted on a headrest or a backrest of a front seat or on a dashboard. For projecting an image on the projection screen the image is projected from the projection device 2 to the projection screen, wherein the light used for projecting forms a light cone 5, for example. Preferably the projection device 2 comprises a RGB-module and/or optical elements, such as a lens or a mirror, which support the projection of the image from the projection device 2 to the projection screen 1. It has been surprisingly found, that the quality of a projected image, i. e. the image that the potential viewer 10 notices, is improved, when the projection screen 1 comprises a at least partially transparent first plate 11, a at least partially transparent second plate 12 and a diffusor 13 being arranged between the first plate 11 and the second plate 10. The quality of the projected image summarizes measurable quantities such as sharpness and sparkle effect and/or the like. Moreover it is desirable to realize a projection screen 1 having a low reflectivity, in order to avoid reducing the quality of the projected image due to disturbing retro-reflections. In particular it is provided that a thickness of the first plate 11 is selected for optimization of the quality of the projected image. Preferably the thickness of the first plate 11 is chosen or adjusted by the manufacturer of the projection screen. Furthermore it is provided that a thickness of the second plate 12 is thicker than the thickness of the first plate 11 along a direction being perpendicular to a main plane of the projection screen. As a result the thickness of the first plate 11 can be reduced independently without restricting other properties of the projection screen 1. Otherwise the projection screen could be for example such thin that the projection screen is not usable as a touchscreen. In particular it is provided that the diffusor extending substantially parallel to the main plane comprises a semi-transparent material. It is also convincible that the diffusor has several layers. Furthermore it is provided that the first plate and/or the second plate comprises or made out of a polycarbonate.

### Reference signs

- 1: projection screen
- 2: projection device
- 5: light cone
- 10: potential viewer
- 11: first plate
- 12: second plate
- 13: diffusor

## Claims

1. Projection screen (1) for displaying an image emitted by a projection device (2), wherein the projection screen (1) is arranged between the projection device (2) and a potential viewer (10) of the screen, wherein the projection screen (1) comprises a first plate (11), a second plate (12) and a diffusor (13), wherein the first plate (11) and the second plate (12) are at least partially transparent and the diffusor (13) is arranged between the first plate (11) and the second plate (12), wherein the projection screen (1) has a main plane, wherein the first plate (11) faces the projection device (2) and the second plate (12) faces the potential viewer (10) of the projection screen (1), wherein the second plate (12) is thicker than the first plate (11) along a direction being perpendicular to the main plane .

2. Projection screen according to claim 1, wherein the projection screen (1) is at least partially a [touchscreen]

3. Projection screen (1) according to one of the preceding claims, wherein the first plate (11) and/or the second plate (12) comprises a polycarbonate.

4. Projection screen (1) according to one of the preceding claims, wherein the diffuser (13) comprises at least partially a semi-transparent material.

5. Projection screen (1) according to one of the preceding claims, wherein image properties noticed by the potential viewer (10) are adaptable by the thickness of the first plate (11).

6. Projection screen (1) according to one of the preceding claims, wherein the projection screen (1) is integrable in a vehicle.

7. Projection unit according to one of the preceding claim, wherein the projection unit (1) comprises a projection device (2) and a projection screen (1) according to one of the preceding claims.

8. Vehicle comprising a projection unit according to claim 7.

9. Method for adapting a projection screen (1) according to one of the claims 1 to 5, wherein the thickness of the first plate (1) is selected for adapting the image properties.

10. Method according to claim 8, wherein the thickness of the first plate (1) is adapted to an environment of a field of application.
